Europäisches Patentamt

(19) European Patent Office

Office européen des brevets

(11) Publication number : **0 392 318 B1**

(12) **EUROPEAN PATENT SPECIFICATION**

(45) Date of publication of patent specification :
02.12.92 Bulletin 92/49

(51) Int. Cl.⁵ : **A01J 25/16,** B65G 1/02

(21) Application number : **90106323.0**

(22) Date of filing : **03.04.90**

(54) **Multipurpose shelving unit for the storage, seasoning and movement of whole cheeses.**

(30) Priority : **10.04.89 IT 8337489**

(43) Date of publication of application :
**17.10.90 Bulletin 90/42**

(45) Publication of the grant of the patent :
**02.12.92 Bulletin 92/49**

(84) Designated Contracting States :
**AT BE CH DE DK ES FR GB IT LI NL SE**

(56) References cited :
**DE-A- 1 961 117
FR-A- 2 159 211
FR-A- 2 190 680**

(73) Proprietor : **LATIC SaS di DI BIDINO V. & C.
Via della Cooperazione 224
I-33030 Coseano (UD) (IT)**

(72) Inventor : **Di Bidino, Virginio
Via S. Daniele 31
I-33030 Rodeano Alto- Rive d'Arcano (UD) (IT)**

(74) Representative : **Petraz, Gilberto Luigi
GLP S.r.l. Piazzale Cavedalis 6/2
I-33100 Udine (IT)**

EP 0 392 318 B1

## Description

This invention concerns a multipurpose shelving unit for the storage, seasoning and movement of whole cheeses.

To be more exact, the invention concerns a shelving unit suitable for the storage of whole cheeses from the salting bath phase to the drying and ripening phase until the cheese is seasoned; this shelving unit can be connected to an analogous shelving unit during the operations of inverting the whole cheeses.

The shelving unit of the invention is employed to advantage in the dairy industry but can be applied equally well to other products which need to have their support surface inverted during the production cycle, such as wooden products, products subjected to cooking and others.

The state of the art covers the need to invert whole cheeses several times while they are being seasoned.

For this operation, which up to a few years ago was carried out by hand for each cheese, there is now available specific equipment having the storage of whole cheeses as its main function.

This equipment, which is very costly and hard to handle, is brought to a stationary inverting station when the inverting operation has to be carried out.

The stationary station is equipped with suitable coordinated inverting means and can perform the operation automatically.

Such a lay-out pre-supposes specific flow lines within the production unit and a continuous movement of such equipment from the storage area to the inverting area.

The state of the art includes also equipment for the storage of whole cheeses which is suitable for inverting the cheeses in cooperation with movable pivotal means capable of the inverting operation. In this case there are shelving units conformed so that they can be connected momentarily to specific coordinated means which are included on the movable pivotal means and which can be actuated during the inverting phase.

Such shelving units overcome the problem of flow of the equipment to the stationary inverting station since the inverting is performed where the shelving units are standing, but these shelving units have a complex structure which in itself is not suitable technologically for the other connected processes such as salting with a bath, for instance, nor are these shelving units suitable to be stacked.

Document DE-A-1.961.117, in accordance with the prior art portion of claim 1, discloses a fork-lift truck which cooperates with respective guides positioned on the centre line of one side of a shelving unit for whole cheeses. This teaching not only enables only one shelving unit to be handled at a time but also does not permit that unit to be delivered or removed during the salting bath phase.

The present applicant has designed, tested and embodied a shelving unit able to overcome the drawbacks of the state of the art.

The invention is set forth in the main claim, while the dependent claims illustrate various features of the invention.

The present application has the purpose of preparing a shelving unit which is suitable to be inverted at the storage site but which at the same time has a simple structure which is easy to handle, as required in the other connected processes.

A plurality of advantages is achieved in this way with regard to the installation costs, the times for moving the shelving units, the efficiency of the single operations and of the overall processing cycle.

The shelving unit according to the invention is a multipurpose unit of a modular type consisting of a normal frame that bears removable shelves to hold the whole cheeses.

The structuring of the shelving unit is limited dimensionally so as to make it easy to handle and capable of being connected to an analogous superposed shelving unit so as to form one single block.

This one single block can be readily lifted and inverted by a movable lift truck provided with an appropriate rotary arm or arms.

So as to form the single block, each shelving unit is equipped with upper and lower lugs which, when connected together, are able to cooperate with the rotary arm or arms of the movable lift truck.

When the required inverting operations have been carried out during the seasoning, the two shelving units are disconnected from each other.

In this way each shelving unit can proceed individually with the processing cycle or can take part again in the processing cycle now concluded.

During the storage phase of the cheeses the shelving units according to the invention can be stacked in a number greater than two, but only pairs of shelving units can be inverted together.

The shelving units are also conformed so that they can be stacked and moved by the usual trolleys or lift trucks.

We have described here a preferred embodiment of the invention, but variants are possible without departing from the scope of the invention as defined in the claims.

The attached figures, which are given as a non-restrictive example, show the following:-

Fig.1 gives a front view of a shelving unit according to the invention;

Fig.2 is a side view of the shelving unit of Fig.1;

Fig.3 is a plan view of the shelving unit of Fig.1;

Fig.4 is a three-dimensional enlarged view of a detail of the shelving unit of the invention;

Fig.5 is a diagram of a line to produce whole cheeses by employing the shelving unit of the invention;

Fig.6 shows a variant of the shelving unit of Fig.1;

Fig.7 shows a further variant of the shelving unit of Fig.1.

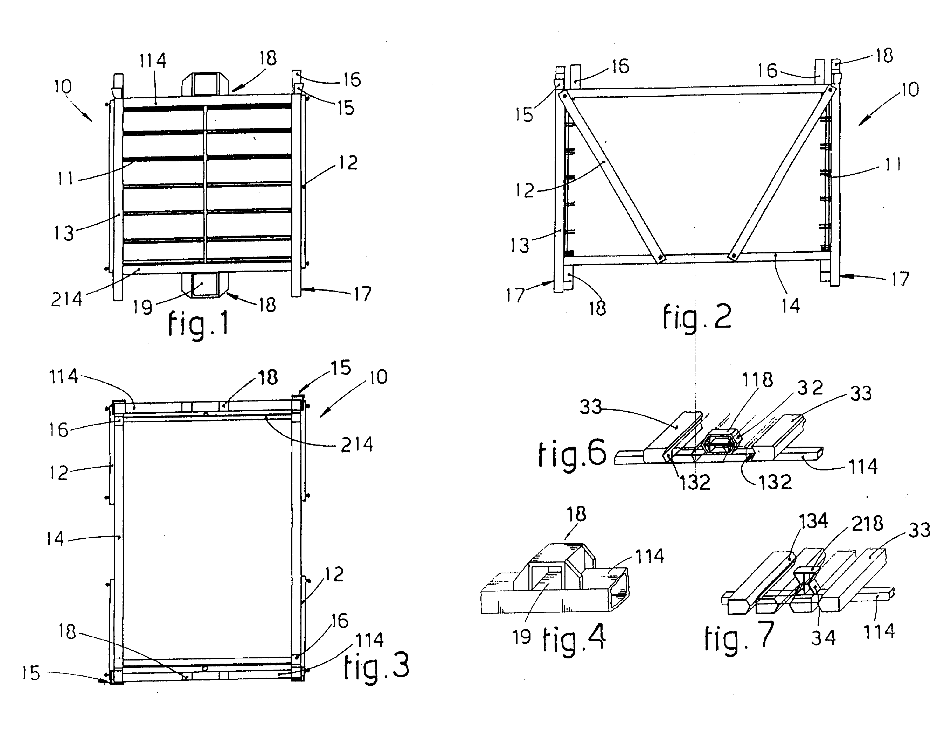

With reference to Figs.1, 2 and 3 a shelving unit 10 according to the invention consists of a vertical structure to support a plurality of guides 11 on which are introduced removable shelves, positioned one above another, on which the whole cheeses are positioned.

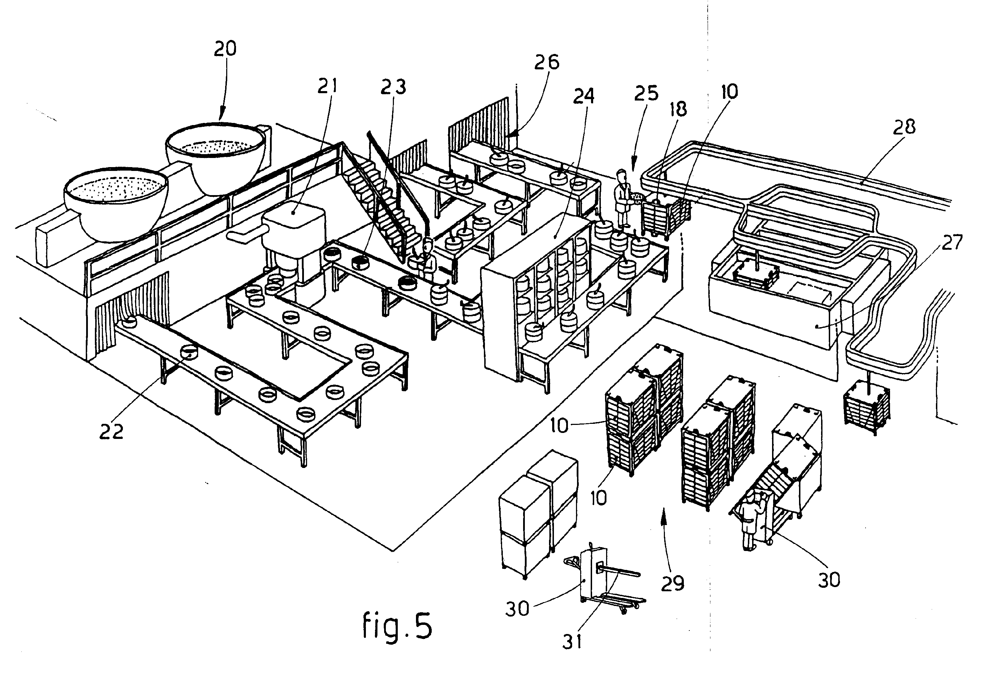

The guides 11, which are shown only partially in Fig. 2 and are not marked in Fig.3, can be variously conformed to suit the respective removable shelves, depending on the various usages for which they are intended, but the overall structuring and anchorage of the guides 11 to the frame of the shelving unit 10 are known in themselves.

Abutment rods are referenced with 12 in the figures and have the task of retaining the removable shelves laterally when the shelving unit 10 is inverted.

The structure of the shelving unit 10 consists of a plurality of uprights 13 and cross members 14 connected together to form a rigid frame.

Angular guide elements 15, in the vicinity of which are also fixed vertical support columns 16 on the lateral cross members 14, are secured at the corners on the upper surface of the shelving unit 10.

The angular guide elements 15 and vertical support columns 16 of one shelving unit 10 cooperate with terminal portions 17 of the uprights 13 of another analogous shelving unit 10 when the shelving units 10 are placed one on top of the other in stacking operations and during the inverting operation.

Lugs 18 aligned with each other and comprising a suitably conformed through hole 19 in this example are fixed in a median position on the upper frontal cross members 114 of the shelving unit 10.

Analogous lugs 18 are fixed in the same way on the lower frontal cross members 214 of the shelving unit 10.

The lower cross members 214 lie on vertical planes offset in relation to the upper cross members 114; this offset positioning is of a value such that, when one shelving unit 10 is superposed on another identical shelving unit 10, the lower lugs 18 of the higher of the two shelving units 10 cooperate with the upper lugs 18 of the lower shelving unit 10.

The positioning of one shelving unit 10 on another shelving unit 10 provides a composite structure arranged to form one single whole during an inverting operation.

Indeed, it is enough for a normal lift truck to be equipped with an appropriately conformed rotary arm, which can be inserted lengthwise within the facing pairs of lugs 18 of the two superposed shelving units 10.

When the desired inverting operations have been carried out, the pairs of shelving units 10 can be separated, thus providing for the individual use of each shelving unit 10 in proceeding with the processing cycle.

Fig.4 shows a possible form of embodiment of the lug 18, in which the through hole 19 has a substantially rectangular section. The purpose of this is to be able to invert two shelving units 10, one superposed on the other, without having recourse to additional means for reciprocal cooperation between the rotary arm of the lift truck and the holes 19 of the lugs 18.

Other configurations of the lug 18 are also possible, such as the type of hole 19, without thereby departing from the scope of the invention.

Fig.6 shows, as an example, a variant of the invention comprising a lug 118 provided with outwardly sloped sidewalls 32 for cooperation with connecting surfaces 132 of lifting arms 33, which belong to a lifting means and perform inverting of the shelving units 10 by engagement of the lugs 118 from the outside

Fig.7 shows an embodiment analogous to that of Fig.6, whereby a lug 218 comprises inwardly sloped sidewalls 34 for cooperation with connecting sidewalls 134 of the lifting arms 33.

Each shelving unit 10 can also be equipped advantageously with wheels fitted to the terminal portions 17 of the uprights 13 and will thus be converted into a trolley which can be moved without the need for an auxiliary lift truck or conveyor.

Fig.5 shows a plant to produce cheeses by employing the shelving units 10 according to the invention.

The processing cycle starts with boilers 20 to curdle the milk, which are connected to a separator 21 for the curds that fills the curds into empty moulds 22.

The filled moulds 23 are brought to a waiting area 24 where the curds are pressed as required. Thereafter at 25 the curds are extracted from the moulds 23 and the whole cheeses are loaded onto the various shelving units 10.

The empty moulds 22 are sent to a washing unit 26 before being returned to the cycle.

Each shelving unit 10 is brought by a suitable conveyor 28 to a salting bath area 27.

The conveyor 28 can use advantageously the lugs 18 or 118 or 218 to convey the shelving units 10.

The conveyor 28 arranges also the successive transport of the shelving units 10 from the salting bath area 27 to a stacking area 29.

In the stacking area 29 the shelving units 10 are connected in pairs, for instance advantageously by being superposed on each other by the same conveyor 28, and remain in the area for the time needed for seasoning of the cheese.

During the seasoning the pair of shelving units 10 is inverted at this position according to the cycle, for instance by means of a normal movable lift truck 30 equipped with a suitable rotary arm 31 which can be connected lengthwise to the lugs 18 of the pairs of shelving units 10, or equipped with arms 33 for connection to the coordinated lugs 118 and 218..

When the seasoning has ended, the shelving units 10 can be separated so as to be returned to the cycle or to be sent to other employments.

## Claims

1. Multipurpose shelving unit (10), in particular for the storage, seasoning and movement of whole cheeses, the shelving unit (10) being suitable for bearing a plurality of removable shelves for the support of whole cheeses, said shelving unit (10) consisting of a framework structure (13-14) of a modular type comprising connecting means (15-16) for connection by superposition to a second identical shelving unit (10), whereby lugs (18-118-218) for the introduction of an inverting means (30-31) are fixed to the first and second shelving units (10), characterised in that the lugs (18-118-218) of the first shelving unit (10) are in line with the lugs (18-118-218) of the second shelving unit (10) when superposed, so that on introduction of the inverting means (30-31) two superposed shelving units (10) are coupled by these inverting means (30-31) at the lugs (18-118-218) and may be inverted as a unit during the seasoning of the whole cheeses.

2. Multipurpose shelving unit (10) as claimed in Claim 1, whereby the coupling of pairs of shelving units (10) is a momentary coupling.

3. Multipurpose shelving unit (10) as claimed in Claim 1 or 2, which comprises at least two pairs of lugs (18).

4. Multipurpose shelving unit (10) as claimed in any claim hereinbefore, in which each pair of lugs (18-118-218) is fitted to upper cross members (14-114) and lower cross members (14-214) respectively.

5. Multipurpose shelving unit (10) as claimed in claim 4, in which each lug (18-118-218) of the pair fitted to the upper cross members (14-114) lies on a vertical plane offset in relation to the corresponding lug (18-118-218) of the pair fitted to the lower cross members (14-214).

6. Multipurpose shelving unit (10) as claimed in claims 4 or 5, in which the lug (18-118-218) is fixed at a median position on the corresponding cross member (14).

7. Multipurpose shelving unit (10) as claimed in any claim hereinbefore, in which each lug (18-118-218) is aligned axially with the other lug (18-118-218) of the pair in question.

8. Multipurpose shelving unit (10) as claimed in any claim hereinbefore, in which each lug (18) comprises a through hole (19).

9. Multipurpose shelving unit (10) as claimed in any claim hereinbefore, in which the through hole (19) has a polygonal section.

10. Multipurpose shelving unit (10) as claimed in any of Claims 1 to 7 inclusive, in which each lug (118-218) has prismatic sidewalls (32-34) that cooperate with coordinated prismatic sidewalls (132-134) of lifting arms (33) of lifting means.

11. Multipurpose shelving unit (10) as claimed in any claim hereinbefore, in which the lugs (18-118-218) can cooperate with means (28) which convey the shelving units (10).

12. Multipurpose shelving unit (10) as claimed in any claim hereinbefore, which can be equipped with its own means for movement on the ground.

13. Multipurpose shelving unit (10) as claimed in any claim hereinbefore, which can be stacked with a plurality of other analogous shelving units (10).

## Patentansprüche

1. Mehrzweckregaleinheit (10), insbesondere zum Lagern, Reifen und Transport von ganzen Käsen, die Mehrzweckregaleinheit (10) weist eine Vielzahl von beweglichen Regalen für die Aufnahme von ganzen Käsen auf, die Regaleinheit (10) besteht aus einem Rahmengestell (13-14) eines Modultyps, das zur Verbindung mit einer zweiten identischen Regaleinheit (10) durch Aufeinanderstellen, Verbindungsmittel (15-16) enthält, mit deren Hilfe Tragstützen (18-118-218) zur Einführung einer Wendevorrichtung (30-31) an den ersten und zweiten Regaleinheiten (10) befestigt werden, **dadurch gekennzeichnet, daß** die Tragstützen (18-118-218) der ersten Regaleinheit (10) in einer Linie mit den Tragstützen (18-118-218) der zweiten Regaleinheit (10), wenn aufeinandergestellt, stehen, sodaß bei Einführung der Wendevorrichtung (30-31) zwei aufeinandergestellte Regaleinheiten (10) durch diese Wendevorrichtungen (30-31) an den Tragstützen (18-118-218) verbunden werden und als eine Einheit während des Reifens von ganzen Käsen gewendet werden können.

2. Mehrzweckregaleinheit (10) **nach Anspruch 1,**

in der das Verbinden von Paaren von Regaleinheiten (10) ein kurzzeitiges Verbinden darstellt.

3. Mehrzweckregaleinheit (10) **nach Anspruch 1 oder 2**, die wenigstens zwei Paar Tragstützen (18) enthält.

4. Mehrzweckregaleinheit (10) **nach einem der vorangegangenen Ansprüche**, in der jedes Paar Tragstützen (18-118-218) jeweils an oberen Querträgern (14-114) und unteren Querträgern (14-214) befestigt ist.

5. Mehrzweckregaleinheit (10) **nach Anspruch 4**, in der jede Tragstütze (18-118-218) des an den oberen Querträgern (14-114) befestigten Paares senkrecht versetzt liegt zur entsprechenden Tragstütze (18-118-218) des an den unteren Querträgern (14-214) befestigten Paares.

6. Mehrzweckregaleinheit (10) **nach Ansprüchen 4 oder 5,** in der die Tragstütze (18-118-218) auf einer mittleren Position auf dem entsprechenden Querträger (14) befestigt ist.

7. Mehrzweckregaleinheit (10) **nach einem der vorangegangenen Ansprüche,** in der jede Tragstütze (18-118-218) axial in einer Linie mit der anderen Tragstütze (18-118-218) des in Frage kommenden Paares liegt.

8. Mehrzweckregaleinheit (10) **nach einem der vorangegangenen Ansprüche,** in der jede Tragstütze (18) eine durchgehende Öffnung (19) enthält.

9. Mehrzweckregaleinheit (10) **nach einem der vorangegangenen Ansprüche,** in der die durchgehende Öffnung (19) einen vieleckigen Querschnitt aufweist.

10. Mehrzweckregaleinheit (10) **nach einem der Ansprüche 1 bis 7,** in der jede Tragstütze (118-218) prismatische Seitenwände (32-34) aufweist, die mit zugeordneten prismatischen Seitenwänden (132-134) von mit Hubarmen (33) versehenen hebemitteln zusammenwirken.

11. Mehrzweckregaleinheit (10) **nach einem der vorangegangenen Ansprüche,** in der die Tragstützen (18-118-218) mit Einrichtungen (28) zusammenwirken können, die die Regaleinrichtungen (10) transportieren.

12. Mehrzweckregaleinheit (10) **nach einem der vorangegangenen Ansprüche,** die mit ihren eigenen Flurbewegungsmitteln ausgerüstet sein kann.

13. Mehrzweckregaleinheit (10) **nach einem der vorangegangenen Ansprüche,** die mit einer Vielzahl anderer entsprechender Regaleinheiten (10) gestapelt werden kann.

## Revendications

1. Unité de casier polyvalente (10), en particulier pour le stockage, la maturation et la manutention de fromages entiers, l'unité de casier (10) étant appropriée pour supporter une pluralité d'étagères amovibles destinées à supporter des fromages entiers, ladite unité de casier (10) étant composée d'une structure de châssis (13-14) d'un type modulaire comprenant des moyens d'assemblage (15-16) destinés à l'assembler par superposition à une seconde unité de casier (10) identique, dans laquelle des oreilles (18-118-218) destinées à l'introduction d'un moyen de retournement (30-31) sont fixées à la première et à la seconde unités de casier (10), caractérisée en ce que les oreilles (18-118-218) de la première unité de casier (10) sont alignées sur les oreilles (18-118-218) de la seconde unité de casier (10) lorsque ces unités sont superposées, de sorte qu'à la suite de l'introduction du moyen de retournement (30-31), deux unités de casier (10) superposées sont accouplées par ces moyens de retournement (30-31) au niveau des oreilles (18-118-218) et peuvent être retournées comme un seul bloc pendant la maturation des fromages entiers.

2. Unité de casier polyvalente (10) selon la revendication 1, dans laquelle l'accouplement des paires d'unités de casier (10) est un accouplement momentané.

3. Unité de casier polyvalente (10) selon la revendication 1 ou 2, qui comprend au moins deux paires d'oreilles (18).

4. Unité de casier polyvalente (10) selon l'une quelconque des revendications ci-dessus, dans laquelle chaque paire d'oreilles (18-118-218) est montée sur des traverses supérieures (14-114) et des traverses inférieures (14-214) respectivement.

5. Unité de casier polyvalente (10) selon la revendication 4, dans laquelle chaque oreille (18-118-218) de la paire montée sur les traverses supérieures (14-114) se trouve dans un plan vertical décalé par rapport à l'oreille correspondante (18-118-218) de la paire montée sur les traverses inférieures (14-214).

6. Unité de casier polyvalente (10) selon les revendications 4 ou 5, dans laquelle l'oreille (18-118-218) est fixée dans une position médiane sur la traverse (14) correspondante.

7.  Unité de casier polyvalente (10) selon l'une quelconque des revendications précédentes, dans laquelle chaque oreille (18-118-218) est alignée axialement sur l'autre oreille (18-118-218) de la paire en question.

8.  Unité de casier polyvalente (10) selon une quelconque des revendications précédentes, dans laquelle chaque oreille (18) présente un trou traversant (19).

9.  Unité de casier polyvalente (10) selon l'une quelconque des revendications précédentes, dans laquelle le trou traversant (19) présente une section polygonale.

10. Unité de casier polyvalente (10) selon une quelconque des revendications 1 à 7 incluse, dans laquelle chaque oreille (118-218) possède des parois latérales prismatiques (32-34) qui coopèrent avec des parois latérales prismatiques correspondantes (132-134) de bras de levage (33) de moyens de levage.

11. Unité de casier polyvalente (10) selon l'une quelconque des revendications précédentes, dans laquelle les oreilles (18-118-218) peuvent coopérer avec des moyens (28) qui transportent des unités de casier (10).

12. Unité de casier polyvalente (10) selon l'une quelconque des revendications précédentes, qui peut être équipée de ses propres moyens lui permettant de se déplacer sur le sol.

13. Unité de casier polyvalente (10) selon l'une quelconque des revendications précédentes, qui peut être empilée avec une pluralité d'autres unités de casier analogues (10).

10
114
18
16
15
12
11
13
214
19 fig.1 18
17

15
16
16
18
10
12
11
13
17
17
18 fig.2 14

114
18
15
10
16
214
12
14
12
16
18
114
15 fig.3 114

118
33 32 33
fig.6
132 132 114

18
114
19 fig.4

134 218
33
fig.7 34 114

EP 0 392 318 B1

fig.5